# EUROPEAN PATENT APPLICATION

(11) **EP 2 677 618 A2**
(43) Date of publication of application: **25.12.2013**
(21) Application number: 13169444.0
(22) Date of filing: 28.05.2013
(51) Int. Cl.: H02J 1/00

(54) **Electrical power generation and distribution fault management system for a vehicle**

(30) Priority: 01.06.2012 US 201213485983
(71) Applicant: Hamilton Sundstrand Corporation, Windsor Locks, CT 06096-1010 (US)
(72) Inventor: Rozman, Gregory I., Rockford, IL Illinois 61114 (US); Gieras, Jacek F., Glastonbury, CT Connecticut 06033 (US); Moss, Steven J., Rockford, IL Illinois 61114 (US)
(74) Representative: Hughes, Andrea Michelle

(57) **Abstract**

An electric power system includes multiple components that include a generator, a rectifier and a power management and distribution center. Multiple sensors are configured to provide actual responses relating to each of the components, Multiple simulation models are configured to simulate responses of each of the components, and multiple comparators are configured to compare the actual responses to the simulated responses and provide compared valuers. A diagnostic module is in communication with the comparators and is configured to determine at least one fault in each of the components.

## Description

### BACKGROUND

This disclosure relates to a fault management system for an electrical power generation system for a vehicle.

Electric power generation, distribution and management system (EPGD&MS) failure modes vary based on applications and construction. Traditionally, the reliability of EPGD&MS and its major components are estimated statistically and a conservative component replacement interval is specified. Premature system component removal based on statistical data results in increased material cost and maintenance time.

The problem of detecting faults and predicting failures in EPGD&MS is complex and difficult to solve. The failure modes for these systems can be masked by dynamic properties of control systems.

### SUMMARY

In one exemplary embodiment, an electric power system includes multiple components that include a generator, a rectifier and a power management and distribution center. Multiple sensors are configured to provide actual responses relating to each of the components. Multiple simulation models are configured to simulate responses of each of the components, and multiple comparators are configured to compare the actual responses to the simulated responses and provide compared values. A diagnostic module is in communication with the comparators and is configured to determine at least one fault in each of the components.

### BRIEF DESCRIPTION OF THE DRAWINGS

The disclosure can be further understood by reference to the following detailed description when considered in connection with the accompanying drawings wherein:
Figure 1 is a schematic of an example electric power generation and distribution system depicting several failure modes.
Figure 2 is a model-based data-driven fault management system diagram.

### DETAILED DESCRIPTION

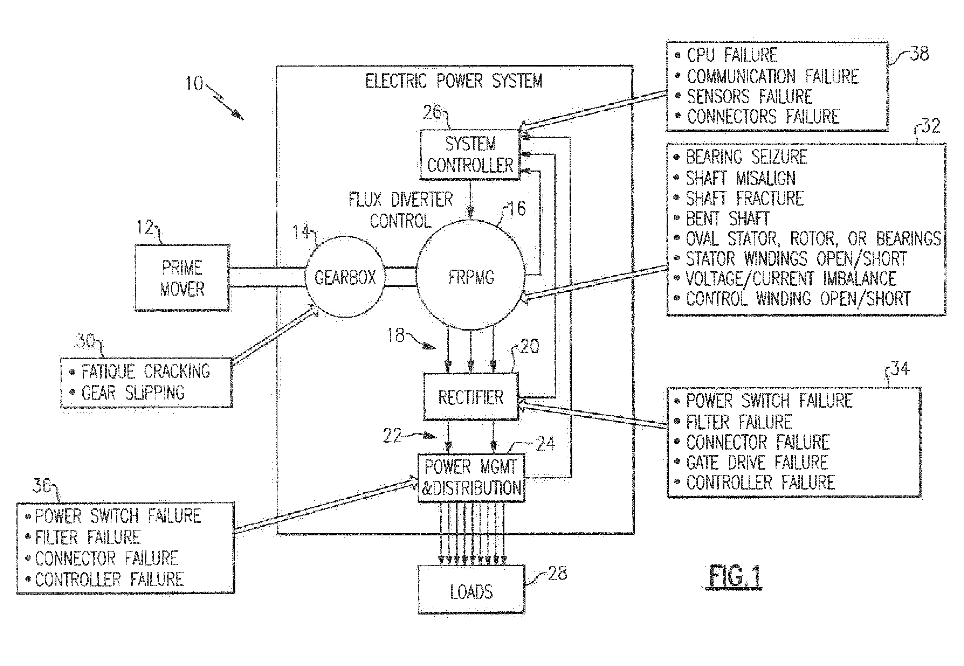

Figure 1 illustrates a high voltage DC electric power generation, distribution and power management system 10. Electric power system 10 employs a flux regulated permanent magnet generator (FRPMG) 16 coupled via speed increasing gearbox 14 to a prime mover 12, such as internal combustion engine of a military ground vehicle. In aircraft applications, the generator 16 may be directly connected to the prime mover 12 such as, for example, a gas turbine engine without a speed changing gearbox. A rectifier 20 is connected to the generator stator windings to convert the AC power 18 and produce DC power 22. The DC power 22 is distributed to DC loads 28 via a power management and distribution center 24. The rectifier 20 can be a passive 6-pulse rectifier or a 6-switch power converter to achieve active rectification. A system controller 26 controls current in the control coil of flux diverter in response to the DC bus voltage on the rectifier output. The electric power system 10 is exemplary and may be varied from the configuration described above.

Example critical failure modes of the electric power system is shown in Figure 1. These failures are manifested by output responses that shift over time from expected values for given input signals. For example, the degradation in the rectifier capacitor is typically measured by the increase in equivalent series resistance (ESR) and decrease in capacitance value, which leads to high ripple current at the DC bus.

Example gearbox failures 30 include fatigue cracking of gearbox components and gear slipping. Example generator failures 32 include bearing seizure; shaft misalignment; shaft fracture; bent shafts; oval stator, rotor or bearings; stator winding opens or shorts; voltage or current imbalances; and control winding opens or shorts. Example rectifier failures 34 include power switch failures, filter failures, connector failures, gate drive failures, and controller failures. Example power management and distribution center failures 36 include power switch failures, filter failures, connector failures, and controller failures. Example system controller failures 38 include CPU failures, communications failures, sensor failures and connection failures.

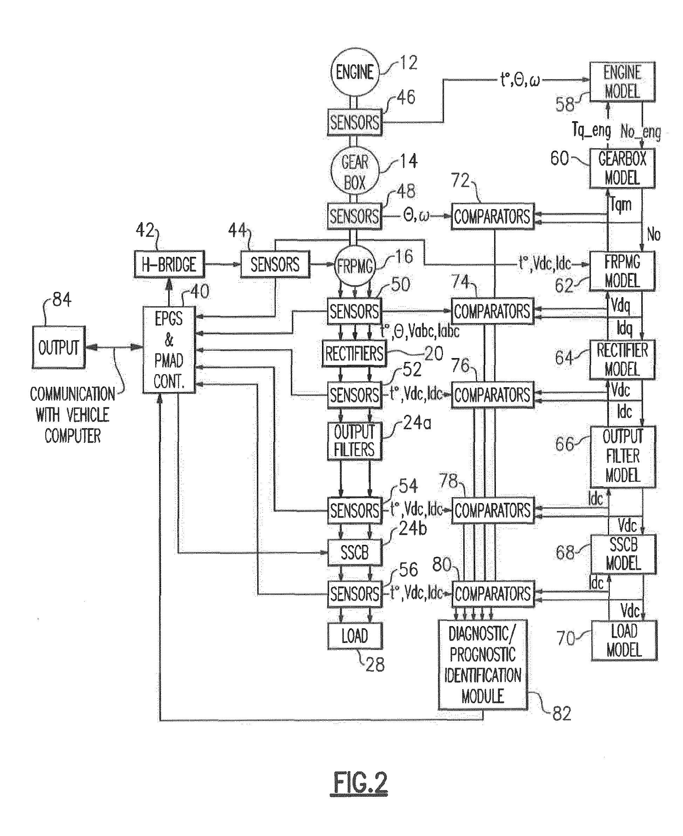

Figure 2 illustrates a model-based data-driven fault management system. A physics-based mathematical model is used for fault detection and failure prediction, and specifically configured to accurately simulate the response of electric power system 10 and its components, for example, the engine 12, gearbox 14, FRPMG 16, rectifier 20, and power management and distribution center 24. The actual responses (from sensors 44-56) and simulated model responses (from simulation models 58-70) from each of the system components are monitored and compared. The comparators 72-80 indicate whether or not one or more of the system components are in an unhealthy state, or degrading toward an unhealthy state at an unacceptable rate.

A controller 40, which may include the system controller 26 (Figure 1), provides a control command to the generator 16 through a bridge 42, and the output is monitored by a bridge sensor 44. In a similar manner, the output of the prime mover 12 is monitored by an engine sensor 46; the output of the gearbox 14 is monitored by a gearbox sensor 48; the output of the generator 16 is monitored by a generator sensor 50; the output of the rectifier 20 is monitored by a rectifier sensor 52; the output of a output filter 24a is monitored by a filter sensor 54; and the output of a solid-state control board (SSCB) 24b is monitored by a control board sensor 56. The sensors may provide a temperature-based response (*t⁰*), an angular position response (θ), a speed response (ω), a voltage response (*V_{abc}, V_{dc}*) and/or a current response (*I_{abc}*, *I_{dc}*), as indicated along the arrowed signals in Figure 2. Responses from the sensors 44-56 are provided to the controller 40 and the comparators 72-80.

The engine simulated model 58, gearbox simulated model 60, generator simulated model 62, rectifier simulated model 64, filter simulated model 66, control board simulated model 68 and load simulated model 70 each receive the actual responses from the sensors 46-56 and exchange the simulated model responses with one another. In this manner, the modeling and is much more integrated and comprehensive. Thus, each component is analyzed for possible failures in the context of the whole system 10.

The comparators 72-80 provide the compared values between the actual responses from the sensors and the simulated model responses are fed back into the simulated models 58-70, which enables a more integrated, comprehensive analysis of the system 10. The compared values also are provided to a diagnostics module 82, which communicates with the controller 40. The controller 40 may provide data to an output device 84, which communicates any faults detected by the diagnostics module 82 to a user via a storage and/or display device, for example. The controller 40 may make adjustments to the operation of any components of the system 10 to prolong the life of the component or prevent a catastrophic failure until the faulty component is replaced.

It should be noted that controllers, comparators, simulation models and/or diagnostics module may be provided by one or more computing devices used to implement various functionality disclosed in this application. In terms of hardware architecture, such a computing device can include a processor, memory, and one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as controllers, buffers (caches), drivers, repeaters, and receivers to enable communications. Further, the local interface may include address, control, and/or data connections to enable appropriate communications among the aforementioned components.

The processor may be a hardware device for executing software, particularly software stored in memory. The processor can be a custom made or commercially available processor, a central processing unit (CPU), an auxiliary processor among several processors associated with the computing device, a semiconductor based microprocessor (in the form of a microchip or chip set) or generally any device for executing software instructions.

The memory can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory may incorporate electronic, magnetic, optical, and/or other types of storage media. Note that the memory can also have a distributed architecture, where various components are situated remotely from one another, but can be accessed by the processor.

The software in the memory may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The Input/Output devices that may be coupled to system I/O Interface(s) may include input devices, for example but not limited to, a keyboard, mouse, scanner, microphone, camera, proximity device, etc. Further, the Input/Output devices may also include output devices, for example but not limited to, a printer, display, etc. Finally, the Input/Output devices may further include devices that communicate both as inputs and outputs, for instance but not limited to, a modulator/demodulator (modem for accessing another device, system, or network), a radio frequency (RF) or other transceiver, a telephonic interface, a bridge, a router, etc.

When the computing device is in operation, the processor can be configured to execute software stored within the memory, to communicate data to and from the memory, and to generally control operations of the computing device pursuant to the software. Software in memory, in whole or in part, is read by the processor, perhaps buffered within the processor, and then executed.

Although an example embodiment has been disclosed, a worker of ordinary skill in this art would recognize that certain modifications would come within the scope of the claims. For that reason, the following claims should be studied to determine their true scope.

## Claims

1. An electric power system comprising:
multiple components including a generator (16), a rectifier (20) and a power management and distribution center (24);
multiple sensors (44-56) configured to provide actual responses relating to each of the components;
multiple simulation models (58-70) configured to simulate responses of each of the components;
multiple comparators (72-80) configured to compare the actual responses to the simulated responses and provide compared values; and
a diagnostic module (82) in communication with the comparators and configured to determine at least one fault in each of the components.

2. The system according to claim 1, wherein the components include a prime mover.

3. The system according to claim 1, wherein a fault of the generator includes at least one of a bearing seizure; a shaft misalignment; a shaft fracture; bent shafts; an oval stator, rotor or bearing; stator winding opens or shorts; voltage or current imbalances; and control winding opens or shorts.

4. The system according to claim 1, wherein the components include a gearbox (14).

5. The system according to claim 4, wherein a fault of the gearbox includes at least one of fatigue cracking and gear slipping.

6. The system according to claim 1, wherein a fault of the power management and distribution center includes at least one of power switch failures, filter failures, connector failures, and controller failures.

7. The system according to claim 1, wherein the power management and distribution center includes a filter (24a).

8. The system according to claim 1, wherein the power management and distribution center includes a circuit board.

9. The system according to claim 1, wherein a fault of the rectifier includes at least one of power switch failures, filter failures, connector failures, gate drive failures, and controller failures.

10. The system according to claim 1, wherein the components include a system controller (40), and the fault of the system controller includes at least one of CPU failures, communications failures, sensor failures and connection failures.

11. The system according to claim 1, wherein the simulation models are in communication with one another to provide simulated model responses to one another.

12. The system according to claim 11, wherein the compared value of a comparator is provided to multiple simulation models.

13. The system according to claim 1, wherein a comparator is configured to provide the compared value to multiple simulation models.

14. The system according to claim 1, comprising an output device receiving a fault and communicating the fault to at least one of a storage device and a display device.

15. The system according to claim 1, wherein a fault corresponds to the actual response that has shifted over time from the simulated response for a given component.
